# EUROPEAN PATENT SPECIFICATION

(11) **EP 3 141 168 B1**
(45) Date of publication and mention of the grant of the patent: **09.12.2020**
(21) Application number: 16185453.4
(22) Date of filing: 24.08.2016
(51) Int. Cl.: A47J 43/044

(54) **STIR BAR FOR FOOD PROCESSOR**
RÜHRSTAB FÜR LEBENSMITTELVERARBEITER
BARRE MÉLANGEUSE POUR ROBOT DE CUISINE

(30) Priority: 08.09.2015 CN 201510565553
(43) Date of publication of application: 15.03.2017
(73) Proprietor: Lee, Wen-Ching, Taichung City 408 (TW)
(72) Inventor: Lee, Wen-Ching, Taichung City 408 (TW)
(74) Representative: Straus, Alexander

(56) References cited:
- EP-A1- 2 220 979
- EP-A1- 2 556 778
- WO-A1-2012/032033
- TW-U- M 384 621
- US-A- 5 368 384

## Description

### BACKGROUND OF THE INVENTION

### 1. Field of the Invention

The present invention relates to stir bar technology and more particularly, to a stir bar for food processor.

### 2. Description of the Related Art

Taiwan Design Patent Number D152401 and Utility Patent Number M384621 respectively disclose a stir bar. According to M384621, the stir bar can detect the temperature in the container, enabling the user to know the current temperature value in the container through a display device. Further relevant prior art documents are: EP 2 556 778 A1 and US 5 368 384 A.

A food processor is normally placed on the top of a desk or other worktable. During food processing, the user usually keeps the line of sight in parallel to or below the cover of the food vessel so that the user can operate the stir bar conveniently. However, under this condition, the user cannot successfully observe the display device at the top side of the stir bar to know the current temperature in the food vessel.

### SUMMARY OF THE INVENTION

The present invention has been accomplished under the circumstances in view. It is therefore the main object of the present invention to provide a stir bar for food processor, which effectively reminds the user when the temperature of the processed food reaches a predetermined monitoring temperature value.

To achieve this and other objects of the present invention, a stir bar is used in a food processor, comprising a casing, a temperature sensor and a reminding device. The casing comprises a top, a bottom, and an accommodation chamber defined in the casing. The temperature sensor is connected to the casing, and disposed in the accommodation chamber of the casing, and adapted for detecting an ambient temperature value around the bottom. The reminding device is connected to the casing, and disposed in the accommodation chamber of the casing and electrically coupled with the temperature sensor. Further, the reminding device has set therein a monitoring temperature value, and is adapted for producing a warning light through the top of the casing when the ambient temperature value detected by the temperature sensor reaches the monitoring temperature value.

Thus, the user can easily understand whether or not the ambient temperature has reached the set monitoring temperature value simply by watching whether or not the stir bar generates a warning light.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is an oblique top elevational view of a stir bar in accordance with the present invention.
FIG. 2 is a sectional elevational view of the stir bar shown in FIG. 1.
FIG. 3 is a circuit block diagram of the stir bar in accordance with the present invention, illustrating the circuit arrangement of the reminding device, the control circuit, the temperature sensor and the display device.
FIG. 4 corresponds to FIG. 3, illustrating an alternate form of the reminding device.

### DETAILED DESCRIPTION OF THE INVENTION

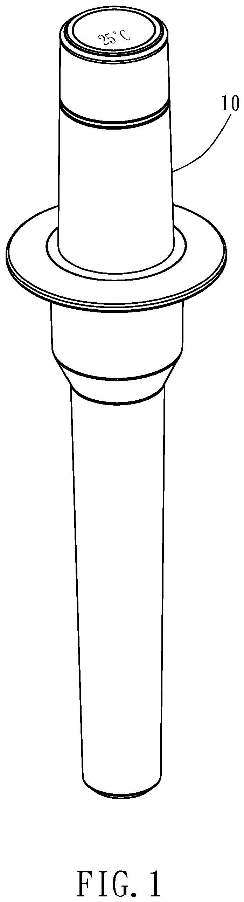

Referring to FIG. 1, a stir bar **10** in accordance with the present invention is adapted for mixing vessel of a food processor or a regular container. A mixing vessel of a food processor is generally equipped with a cover that has an opening. The stir bar **10** of the present invention can be inserted through the opening of the cover into the inside of the mixing vessel to stir up food, powder and fluid. A regular container, such as bowl or cup, has an opening. The stir bar **10** of the present invention can be inserted through the opening of the container into the inside thereof to stir up food, powder and fluid.

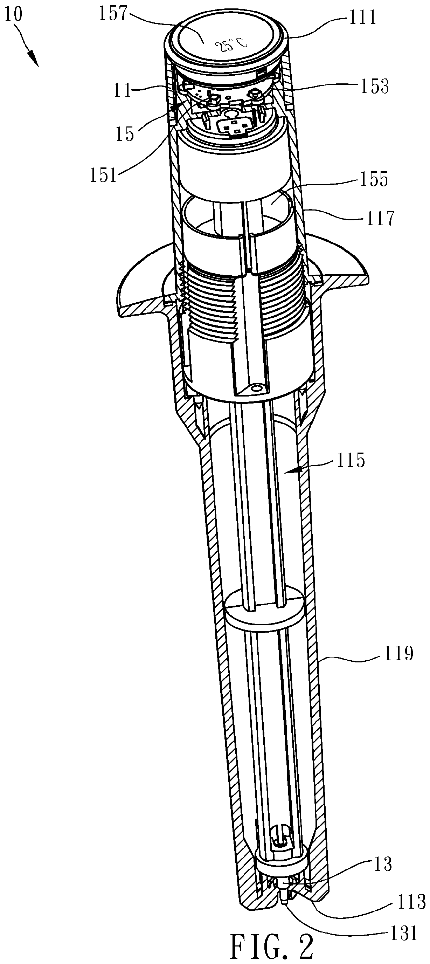

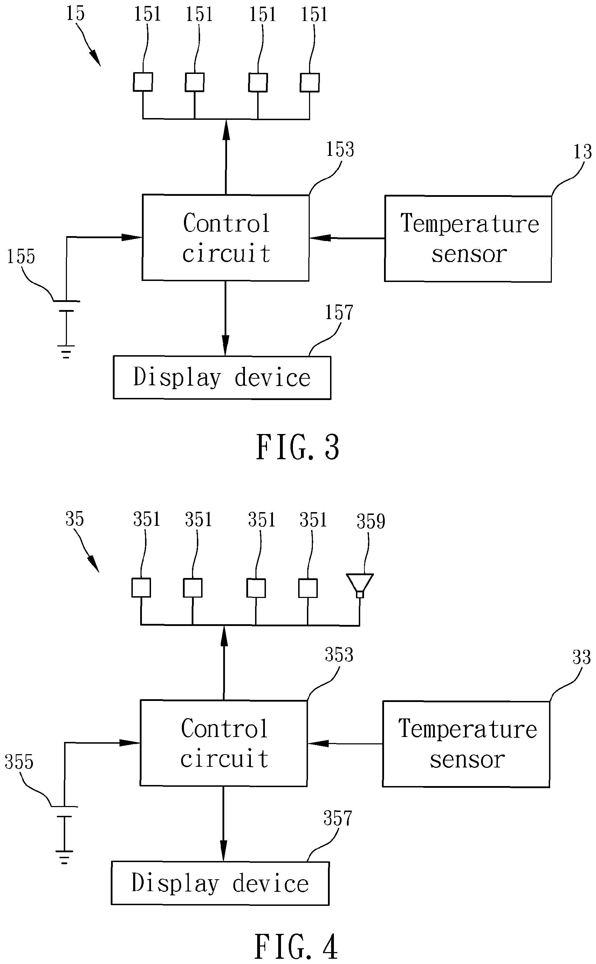

Referring to FIG. 2 and FIG. 3 where FIG. 2 is a sectional elevational view of the casing **11** of the stir bar **10** shown in FIG. 1; FIG. 3 is a circuit block diagram of the temperature sensor **13** and the reminding device **15** shown in FIG. 2. The stir bar **10** comprises a casing **11,** a temperature sensor **13** and a reminding device **15.**

The casing **11** comprises a top **111,** a bottom **113** and an accommodation chamber **115.** The accommodation chamber **115** is defined inside the casing **11.** In the present preferred embodiment, the casing **11** comprises a top shell **117** and a bottom shell **119.** The top shell **117** and the bottom shell **119** are connected together by, but not limited to, a screw joint.

The temperature sensor **13** is connected to the casing **11** and positioned in the accommodation chamber **115,** and adapted for sensing an ambient temperature around the bottom **113** of the casing **11.** In the present preferred embodiment, the temperature sensor **13** is mounted in the bottom shell **119** with a probe tip **131** thereof inserted through the bottom **113** of the casing **11** for directly sensing the ambient temperature value around the bottom **113** of the casing **11.** Because the probe tip **131** of the temperature sensor **13** is exposed to the outside of the bottom **113** of the casing **11,** the temperature sensor **13** can directly and accurately detect temperature.

The reminding device **15** is connected to the casing **11** and positioned in the accommodation chamber **115,** and also electrically coupled with the temperature sensor **13.** The reminding device **15** has built therein a monitoring temperature value. When the ambient temperature detected by the temperature sensor **13** reaches the monitoring temperature value, the reminding device **15** creates a light in the top **111** of the casing **11.** The color of the created light can be an eye-catching color, such as red, blue or yellow.

The reminding device **15** is mounted inside the top shell **117**, comprising a plurality of light sources **151,** a control circuit **153** and a battery pack **155.** The light sources **151**, the battery pack **155** and the temperature sensor **13** are electrically coupled to the control circuit **153.** The light sources **151** can be, but not limited to, light-emitting diodes (LEDs) that are capable of producing high brightness light to achieve the effect of reminding. The battery pack **155** provides the light source **151**, the control circuit **153** and the temperature sensor **13** with the necessary electricity. Preferably, the battery pack **155** uses a secondary battery for the advantages of being rechargeable and in compliance with environmental protection requirements, however, secondary battery is not a limitation. The monitoring temperature value is set in the control circuit **153** and adjustable. The preferred choice is to use a secondary battery system for the advantages of reuse, and comply with environmental protection, but without limitation,

Further, the top **111** of the casing **11** is light transmissive, i.e., the light emitted by the light source **151** can pass through the light transmissive top **111** of the casing **11.** The term of light transmissive means that the material allows light to pass therethrough, thus, the material is not limited to transparent or translucent.

Further, because the light sources **151** are mounted in the casing **11** and the top **111** of the casing **11** is selected from a light transmissive material, the casing **11** needs not to be processed to provide a through hole, providing a better waterproof structure. In actual application, the overall top shell **117** can be made from a light transmissive material, i.e., the light transmissive design is not limited to the area of the top **111** of the casing **11.**

In the present preferred embodiment, the reminding device **15** further comprises a display device **157** electrically coupled to the control circuit **153.** The display device **157** is adapted for displaying the detected ambient temperature value and the aforesaid monitoring temperature value. However, this configuration is not a limitation, for example, the display device **157** can be configured to simply display the detected ambient temperature value or the monitoring temperature value. Further, the light transmissive area of the top **111** can be defined in the border area of the top **111** around the display device **157**, however, this configuration is not a limitation.

FIG. 4 illustrates an alternate form of the circuit block diagram of the stir bar in accordance with the present invention. As illustrated, the reminding device, referenced by **35** comprises a plurality of light sources **351**, a control circuit **353**, a battery pack **355**, a display device **357** and a speaker **359.** The reminding device **35** shown in FIG. 4 is substantially similar to the aforesaid reminding device **15** shown in FIG. 3 with the exception that the speaker **359.** The speaker **359** is electrically coupled to the control circuit **353.**

When the ambient temperature value reaches the monitoring temperature value, the speaker **359** is immediately driven by the control circuit **353** to output a warning sound. Thus, the stir bar generates a warning sound and a warning light to remind the user that the ambient temperature value has reached to the monitoring temperature value. However, in actual application, the sound warning function can be omitted. Thus, the stir bar mainly adopts light warning function and supplemented by sound warning function.

The word "the ambient temperature value reaches the monitoring temperature value" means the ambient temperature value is equal to the monitoring temperature value, or the ambient temperature value exceeds the monitoring temperature value. Further, since the temperature sensor and the reminding device both are mounted in the accommodation chamber, the casing is not limited to the configuration of consisting of two shells (top and bottom shells).

As described above, the stir bar is equipped with a reminding device that is capable of generating a warning light when the detected ambient temperature value reaches a predetermined monitoring temperature value, enabling the user to easily know that the internal temperature of the food vessel of the food processor has reached the set temperature value. Therefore, the stir bar of the present invention provides better temperature reminding effects.

## Claims

1. A stir bar (10) for use in a food processor, said stir bar (10) comprises a casing (11), a temperature sensor (13) and a reminding device (15), said casing (11) comprises a top (111), a bottom (113) and an accommodation chamber (115) defined in said casing (11), said temperature sensor (13) connected to said casing (11) and disposed in said accommodation chamber (115) of said casing (11) and adapted for detecting an ambient temperature value around said bottom (113) of said casing (11), said reminding device (15) connected to said casing (11) and disposed in said accommodation chamber (115) of said casing (11) and electrically coupled with said temperature sensor (13), said stir bar (10) being **characterized in that**:
said reminding device (15) having set therein a monitoring temperature value and being adapted for producing a warning light through said top (111) of said casing (11) when the said ambient temperature value detected by said temperature sensor (13) reaches said monitoring temperature value.

2. The stir bar (10) as claimed in claim 1, wherein said reminding device (15) comprises a light source (151, 351), a control circuit (153, 353) and a battery pack (155, 355), said light source (151, 351), said battery pack (155, 355) and said temperature sensor (13) being respectively electrically coupled to said control circuit (153, 353), said light source (151, 351) being disposed in said top (111) of said casing (11).

3. The stir bar (10) as claimed in claim 2, wherein said top (111) of said casing (11) is light transmissive.

4. The stir bar (10) as claimed in claim 2, wherein said reminding device (15) further comprises a display device (157, 357) electrically coupled to said control circuit (153, 353) and controllable by said control circuit (153, 353) to display said ambient temperature value.

5. The stir bar (10) as claimed in claim 1, wherein said reminding device (15) further comprises a speaker (359) electrically coupled to said control circuit (353) and controllable by said control circuit (353) to generate a warning sound when said ambient temperature value reaches said monitoring temperature value.

6. The stir bar (10) as claimed in claim 1, wherein said casing (11) consists of a top shell (117) and a bottom shell (119); said reminding device (15) is disposed in said top shell (117); said temperature sensor (13) is disposed in said bottom shell (119).

7. The stir bar (10) as claimed in claim 1, wherein said temperature sensor (13) comprises a probe tip (131) inserted through said bottom (113) of said casing (11).

## Patentansprüche

1. Rührstab (10) zur Verwendung in einer Küchenmaschine, worin der Rührstab (10) ein Gehäuse (11), einen Temperatursensor (13) und eine Erinnerungseinrichtung (15) umfasst, worin das Gehäuse (11) ein Oberteil (111), ein Unterteil (113) und eine Aufnahmekammer (115) umfasst, die in dem Gehäuse (11) definiert ist, worin der Temperatursensor (13) mit dem Gehäuse (11) verbunden und in der Aufnahmekammer (115) des Gehäuses (11) angeordnet und angepasst ist, einen Umgebungstemperaturwert um das Unterteil (113) des Gehäuses (11) zu erfassen, worin die Erinnerungseinrichtung (15) mit dem Gehäuse (11) verbunden und in der Aufnahmekammer (115) des Gehäuses (11) angeordnet und mit dem Temperatursensor (13) elektrisch gekoppelt ist, worin der Rührstab (10) **dadurch gekennzeichnet ist, dass**:
die Erinnerungseinrichtung (15) einen darin eingestellten Überwachungstemperaturwert aufweist und angepasst ist, ein Warnlicht durch das Oberteil (111) des Gehäuses (11) zu erzeugen, wenn der durch den Temperatursensor (13) erfasste Umgebungstemperaturwert den Überwachungstemperaturwert erreicht.

2. Rührstab (10) nach Anspruch 1, worin die Erinnerungseinrichtung (15) eine Lichtquelle (151, 351), einen Steuerungsschaltkreis (153, 353) und einen Akkusatz (155, 355) umfasst, worin die Lichtquelle (151, 351), der Akkusatz (155, 355) und der Temperatursensor (13) entsprechend mit dem Steuerungsschaltkreis (153, 353) elektrisch gekoppelt sind, worin die Lichtquelle (151, 351) in dem Oberteil (111) des Gehäuses (11) angeordnet ist.

3. Rührstab (10) nach Anspruch 2, worin das Oberteil (111) des Gehäuses (11) lichtdurchlässig ist.

4. Rührstab (10) nach Anspruch 2, worin die Erinnerungseinrichtung (15) weiter eine Anzeigeeinrichtung (157, 357) umfasst, die mit dem Steuerungsschaltkreis (153, 353) elektrisch gekoppelt und durch den Steuerungsschaltkreis (153, 353) steuerbar ist, den Umgebungstemperaturwert anzuzeigen.

5. Rührstab (10) nach Anspruch 1, worin die Erinnerungseinrichtung (15) weiter einen Lautsprecher (359) umfasst, der mit dem Steuerungsschaltkreis (353) elektrisch gekoppelt und durch den Steuerungsschaltkreis (353) steuerbar ist, einen Warnton zu erzeugen, wenn der Umgebungstemperaturwert den Überwachungstemperaturwert erreicht.

6. Rührstab (10) nach Anspruch 1, worin das Gehäuse (11) aus einer Oberschale (117) und einer Unterschale (119) besteht; worin die Erinnerungseinrichtung (15) in der Oberschale (117) angeordnet ist; worin der Temperatursensor (13) in der Unterschale (119) angeordnet ist.

7. Rührstab (10) nach Anspruch 1, worin der Temperatursensor (13) eine Sondenspitze (131) umfasst, die durch das Unterteil (113) des Gehäuses (11) eingesetzt ist.

## Revendications

1. Barre mélangeuse (10) pour une utilisation dans un robot de cuisine, ladite barre mélangeuse (10) comprenant une enveloppe (11), un capteur de température (13) et un dispositif de rappel (15), ladite enveloppe (11) comprenant une partie supérieure (111), un fond (113) et une chambre de réception (115) définie dans ladite enveloppe (11), ledit capteur de température (13) étant relié à ladite enveloppe (11) et disposé dans ladite chambre de réception (115) de ladite enveloppe (11) et conçu pour détecter une valeur de température ambiante autour dudit fond (113) de ladite enveloppe (11), ledit dispositif de rappel (15) étant relié à ladite enveloppe (11) et disposé dans ladite chambre de réception (115) de ladite enveloppe (11) et électriquement couplé audit capteur de température (13), ladite barre mélangeuse (10) étant **caractérisée en ce que** :
ledit dispositif de rappel (15) possède, définie en son sein, une valeur de température de surveillance et est conçu pour produire un témoin lumineux à travers ladite partie supérieure (111) de ladite enveloppe (11) lorsque ladite valeur de température ambiante détectée par ledit capteur de température (13) atteint ladite valeur de température de surveillance.

2. Barre mélangeuse (10) selon la revendication 1, ledit dispositif de rappel (15) comprenant une source de lumière (151, 351), un circuit de commande (153, 353) et un bloc-batterie (155, 355), ladite source de lumière (151, 351), ledit bloc-batterie (155, 355) et ledit capteur de température (13) étant respectivement électriquement couplés audit circuit de commande (153, 353), ladite source de lumière (151, 351) étant disposée dans ladite partie supérieure (111) de ladite enveloppe (11).

3. Barre mélangeuse (10) selon la revendication 2, ladite partie supérieure (111) de ladite enveloppe (11) étant transparente à la lumière.

4. Barre mélangeuse (10) selon la revendication 2, ledit dispositif de rappel (15) comprenant en outre un dispositif d'affichage (157, 357) couplé électriquement audit circuit de commande (153, 353) et pouvant être commandé par ledit circuit de commande (153, 353) pour afficher ladite valeur de température ambiante.

5. Barre mélangeuse (10) selon la revendication 1, ledit dispositif de rappel (15) comprenant en outre un haut-parleur (359) couplé électriquement audit circuit de commande (353) et pouvant être commandé par ledit circuit de commande (353) pour générer un son d'avertissement lorsque ladite valeur de température ambiante atteint ladite valeur de température de surveillance.

6. Barre mélangeuse (10) selon la revendication 1, ladite enveloppe (11) étant constituée d'une coque supérieure (117) et d'une coque inférieure (119) ; ledit dispositif de rappel (15) étant disposé dans ladite coque supérieure (117) ; ledit capteur de température (13) étant disposé dans ladite coque inférieure (119).

7. Barre mélangeuse (10) selon la revendication 1, ledit capteur de température (13) comprenant une pointe de sonde (131) insérée à travers ledit fond (113) de ladite enveloppe (11).
